# EUROPEAN PATENT SPECIFICATION

(11) **EP 4 184 825 B1**
(45) Date of publication and mention of the grant of the patent: **25.03.2026**
(21) Application number: 21846445.1
(22) Date of filing: 07.07.2021
(51) Int. Cl.: H04L 1/00, H04L 25/03

(54) **DATA SCRAMBLING METHOD, DATA DESCRAMBLING METHOD, AND RELATED DEVICE**
DATENVERSCHLÜSSELUNGSVERFAHREN, DATENENTSCHLÜSSELUNGSVERFAHREN UND ZUGEHÖRIGE VORRICHTUNG
PROCÉDÉ D'EMBROUILLAGE DE DONNÉES, PROCÉDÉ DE DÉSEMBROUILLAGE DE DONNÉES ET DISPOSITIF ASSOCIÉ

(30) Priority: 22.07.2020 CN 202010712635
(43) Date of publication of application: 24.05.2023
(60) Divisional application: 26157543.5
(73) Proprietor: Huawei Technologies Co., Ltd., Shenzhen, Guangdong 518129 (CN)
(72) Inventor: WANG, Xu, Shenzhen, Guangdong 518129 (CN); WU, Xuming, Shenzhen, Guangdong 518129 (CN); NIE, Shiwei, Shenzhen, Guangdong 518129 (CN)
(74) Representative: Maiwald GmbH
(86) International application number: PCT/CN2021/104936
(87) International publication number: WO 2022/017182

(56) References cited:
- CN-A- 106 658 725
- CN-A- 107 534 972
- CN-A- 109 076 390
- US-A1- 2011 142 437
- US-A1- 2014 101 351
- US-B2- 8 600 057
- DENIS KHOTIMSKY MOTOROLA USA YUANQIU LUO HUAWEI TECHNOLOGIES CHINA HIROAKI MUKAI MITSUBISHI JAPAN: "XG-PON Transmission Convergence layer specification", ITU-T DRAFT ; STUDY PERIOD 2009-2012, INTERNATIONAL TELECOMMUNICATION UNION, GENEVA ; CH, vol. Q2, 17 April 2010 (2010-04-17), pages 1 - 117, XP017447911

## Description

### TECHNICAL FIELD

This application relates to the field of optical communication, and in particular, to a data scrambling method, a data descrambling method, and a related device.

### BACKGROUND

A passive optical network (Passive Optical Network, PON) access technology is widely deployed worldwide due to low network costs, low maintenance costs, and a high-quality service. The PON includes an optical line terminal (Optical Line Terminal, OLT) at a central office, an optical network unit (Optical Network Unit, ONU) on a user side, and an optical distribution network (Optical Distribution Network, ODN) that is used to connect the OLT and the ONU.

In the PON network, sending data from the OLT to the ONU is referred to as downstream data transmission, and sending data from the ONU to the OLT is referred to as upstream data transmission. During downstream data transmission, the OLT sends downstream data to all ONUs in a broadcast mode, and each ONU can parse only data in a timeslot corresponding to the ONU. During upstream data transmission, each ONU sends upstream data to the OLT in a specific timeslot according to a sending rule of time division multiplexing. However, for both the upstream data and the downstream data, bits 0 and bits 1 in the data may be unevenly distributed. For example, many consecutive bits 0 or bits 1 may appear in the data, which causes a high bit error rate at a data receiving end.

The document "XG-PON Transmission Convergence layer specification" by D. Khotimsky et al. (ITU-T G.987.3 Draft) describes a PHY adaptation sublayer that provides forward error correction, scrambling and line encoding.

United States patent application US 2014/0101351 A1 describes a two-wire communication protocol engine that manages control and data transmissions in a bi-directional, multi-node bus system, wherein data scrambling may be applied to a portion of the data transmitted over a twisted wire pair bus.

### SUMMARY

This application provides a data scrambling method, a data descrambling method, and a related device. Raw data is scrambled, so that bits 0 and bits 1 in scrambled target data are more evenly distributed. This reduces a possibility that consecutive bits 0 or bits 1 appear in the target data, thereby reducing a bit error rate at a data receiving end.

The invention is set out in the appended set of claims.

It should be noted that the "bit 0" in this application represents a bit whose value is 0, and the "bit 1" represents a bit whose value is 1.

According to a first aspect, this application provides a data scrambling method. The method may be specifically performed by an OLT or an ONU, and includes: first, generating a raw data frame, where the raw data frame includes raw data and a physical synchronization block (physical synchronization block, PSB); next, generating a preload pattern (preload pattern) based on a target bit, where the target bit is a part of bits in a superframe counter (Superframe counter, SFC) bit sequence corresponding to the raw data frame; and further, scrambling the raw data based on the preload pattern to obtain target data.

It should be noted that both the OLT and the ONU are locally equipped with SFCs. The local SFC counts each raw data frame. Therefore, each raw data frame has an output value of an SFC corresponding to the raw data frame, that is, an SFC value. Specifically, the SFC value may be represented in a form of a bit sequence.

In this implementation, the raw data is scrambled, so that bits 0 and bits 1 in the scrambled target data are more evenly distributed. This reduces a possibility that consecutive bits 0 or bits 1 appear in the target data, thereby reducing a bit error rate at a data receiving end.

Optionally, in some possible implementations, a difference between a number of bits 0 and a number of bits 1 in the preload pattern is less than a preset value. Preferably, the number of bits 0 and the number of bits 1 in the preload pattern are the same. The bits 0 and the bits 1 in the preload pattern are more evenly distributed, thereby further ensuring even distribution of bits 0 and bits 1 in the scrambled target data.

Optionally, in some possible implementations, if the raw data frame is a data frame generated by the OLT, the PSB is specifically a downstream physical synchronization block (downstream physical synchronization block, PSBd). The PSBd includes an SFC field, and the SFC field includes the SFC value corresponding to the raw data frame. Specifically, a value of the SFC field is the same as an output value of the local SFC of the OLT. The OLT can extract the target bit from the SFC field, or can extract the target bit from the output value of the local SFC. If the raw data frame is a data frame generated by the ONU, the PSB is specifically an upstream physical synchronization block (upstream physical synchronization block, PSBu). The PSBu includes no SFC field. The ONU can extract the target bit only from an output value of the local SFC. In this implementation, several specific implementations of determining the target bit are provided, which improves expansibility of this solution.

Optionally, in some possible implementations, the scrambling the raw data based on the preload pattern to obtain target data includes:
first, inputting the preload pattern to a scrambler; then, performing an operation on the preload pattern according to a polynomial operation rule preset in the scrambler to generate a target pattern; and further, performing an exclusive OR operation on each bit of the raw data based on the target pattern to obtain the target data. In this implementation, an implementation of scrambling the raw data by using the scrambler is provided, which improves practicality of this solution.

Optionally, in some possible implementations, a length of the preload pattern is M bits, M is an integer greater than 1, the target bit includes N least significant bits in the SFC value, and M is greater than or equal to 2 times of N. Alternatively, a length of the SFC value is K bits, K is an integer greater than 1, and K is greater than or equal to 2 times of N. In this implementation, the target bit is a part of least significant bits in the SFC value. Because in a counting process of the SFC, a least significant bit in the SFC value changes faster than a most significant bit, that is, the least significant bit in the SFC value continuously changes with a number of frames, the preload pattern constructed based on the least significant bit in the SFC value also continuously changes with the number of frames, so that a scrambling manner of each frame continuously changes. Therefore, an effect of data encryption is better, and data transmission security is improved.

Optionally, in some possible implementations, the generating a preload pattern based on a target bit includes:
first, determining an opposite value of a value of each bit in the target bit; and further, arranging the value of each bit in the target bit and the opposite value of the value of each bit in the target bit to obtain the preload pattern. In this implementation, an inversion operation is performed on the value of each bit in the target bit, and then arranging is performed. This is operated to enable the bits 0 and the bits 1 in the preload pattern to be more evenly distributed.

Optionally, in some possible implementations, values of two adjacent bits in the preload pattern are a value of any bit in the target bit and an opposite value of the value of the bit.

Optionally, in some possible implementations, the generating a preload pattern based on a target bit includes:
generating the preload pattern based on the target bit and a preset data pattern. In this implementation, another implementation of constructing the preload pattern by using the target bit is provided, which improves flexibility of this solution.

Optionally, in some possible implementations, after the raw data is scrambled to obtain the target data, a target data frame including the target data and the PSB is sent. A difference between the target data frame and the raw data frame lies only in that the scrambled target data replaces the raw data.

According to a second aspect, this application provides a data descrambling method. The method may be specifically performed by an OLT or an ONU, and includes: first, receiving a target data frame, where the target data frame includes target data and a PSB; next, generating a preload pattern based on a target bit, where the target bit is a part of bits in an SFC value corresponding to the target data frame; and further, descrambling the target data based on the preload pattern to obtain raw data.

It should be noted that the target bit extracted from the SFC value is the same as a target bit determined by a data transmitting end. In addition, a data receiving end needs to encode the target bit in an encoding manner the same as that of the data transmitting end, to obtain a preload pattern the same as that of the data transmitting end. Therefore, the data receiving end can restore the raw data after descrambling the target data based on the preload pattern.

Optionally, in some possible implementations, a difference between a number of bits 0 and a number of bits 1 in the preload pattern is less than a preset value. Preferably, the number of bits 0 and the number of bits 1 in the preload pattern are the same.

Optionally, in some possible implementations, if the data receiving end is the ONU, the ONU can extract the target bit from an SFC field of the target data frame. or can extract the target bit from an output value of a local SFC. If the data receiving end is the OLT, the OLT can extract the target bit only from an output value of a local SFC.

Optionally, in some possible implementations, the descrambling the target data based on the preload pattern to obtain raw data includes:
first, inputting the preload pattern to the descrambler; then, performing an operation on the preload pattern according to a polynomial operation rule preset in the descrambler to generate a target pattern; and further, performing an exclusive OR operation on each bit of the target data based on the target pattern to obtain the raw data.

Optionally, in some possible implementations, a length of the preload pattern is M bits, M is an integer greater than 1, the target bit includes N least significant bits in the SFC value, and M is greater than or equal to 2 times of N. Alternatively, a length of the SFC value is K bits, K is an integer greater than 1, and K is greater than or equal to 2 times of N.

Optionally, in some possible implementations, the generating a preload pattern based on a target bit includes:
first, determining an opposite value of a value of each bit in the target bit; and further, arranging the value of each bit in the target bit and the opposite value of the value of each bit in the target bit to obtain the preload pattern.

Optionally, in some possible implementations, values of two adjacent bits in the preload pattern are a value of any bit in the target bit and an opposite value of the value of the bit.

Optionally, in some possible implementations, the generating a preload pattern based on a target bit includes: generating the preload pattern based on the target bit and a preset data pattern.

Optionally, in some possible implementations, after the receiving a target data frame, and before obtaining the target bit from the superframe counter SFC value corresponding to the target data frame, the method further includes: performing frame synchronization on the target data frame, to determine a boundary between frames and the SFC field in the target data frame.

According to a third aspect, this application provides a data scrambling apparatus, including a processor, a memory, and an optical transceiver. The processor, the memory, and the optical transceiver are connected to each other by using a line. The processor invokes program code in the memory to perform the data scrambling method shown in any implementation of the first aspect.

According to a fourth aspect, this application provides a data descrambling apparatus, including a processor, a memory, and an optical transceiver. The processor, the memory, and the optical transceiver are connected to each other by using a line. The processor invokes program code in the memory to perform the data descrambling method shown in any implementation of the second aspect.

According to a fifth aspect, this application provides an OLT, including the data scrambling apparatus shown in the third aspect and the data descrambling apparatus shown in the fourth aspect.

According to a sixth aspect, this application provides an ONU, including the data scrambling apparatus shown in the third aspect and the data descrambling apparatus shown in the fourth aspect.

According to a seventh aspect, this application provides a passive optical network. The passive optical network includes the OLT shown in the fifth aspect and the ONU shown in the sixth aspect.

According to an eighth aspect, this application provides a computer-readable storage medium. The computer-readable storage medium stores a computer program. When the computer program is executed by hardware, some or all of the steps of any method according to the first aspect and the second aspect can be implemented.

In embodiments of this application, a part of target bits are extracted from the SFC value corresponding to the raw data frame to construct the preload pattern. Then, the raw data in the raw data frame is scrambled based on the preload pattern to obtain the to-be-sent target data. The raw data is scrambled, so that the bits 0 and the bits 1 in the scrambled target data are more evenly distributed. This reduces a possibility that consecutive bits 0 or bits 1 appear in the target data, thereby reducing the bit error rate at the data receiving end.

### BRIEF DESCRIPTION OF DRAWINGS

FIG. 1 is a schematic diagram of a system architecture of a PON;
FIG. 2 is a schematic diagram of an embodiment of a data scrambling method according to this application;
FIG. 3 is a schematic diagram of a structure of a PHY frame according to this application;
FIG. 4 is a schematic diagram of a structure of a PSBd according to this application;
FIG. 5 is a schematic diagram of a structure of a PSBu according to this application;
FIG. 6 is a schematic diagram of a first embodiment of generating a preload pattern according to this application;
FIG. 7 is a schematic diagram of a second embodiment of generating a preload pattern according to this application;
FIG. 8 is a schematic diagram of a third embodiment of generating a preload pattern according to this application;
FIG. 9 is a schematic diagram of a structure of a scrambler according to this application;
FIG. 10 is a schematic diagram of an embodiment of a data descrambling method according to this application;
FIG. 11 is a schematic diagram of an embodiment of a data scrambling apparatus according to this application;
FIG. 12 is a schematic diagram of an embodiment of a data descrambling apparatus according to this application;
FIG. 13 is a schematic diagram of a structure of a possible OLT according to this application;
FIG. 14 is a schematic diagram of a structure of a possible ONU according to this application;
FIG. 15 is a schematic diagram of a structure of another possible OLT according to this application;
FIG. 16 is a schematic diagram of a structure of another possible ONU according to this application; and
FIG. 17 is a schematic diagram of a structure of a passive optical network according to this application.

### DESCRIPTION OF EMBODIMENTS

This application provides a data scrambling method, a data descrambling method, and a related device. Raw data is scrambled, so that bits 0 and bits 1 in scrambled target data are more evenly distributed. This reduces a possibility that consecutive bits 0 or bits 1 appear in the target data, thereby reducing a bit error rate at a data receiving end.

Currently, broadband access technologies are mainly classified into a copper access technology (for example, various DSL technologies) and an optical access technology. An access network implemented by using the optical access technology is referred to as an optical access network (optical access network, OAN).

A passive optical network (passive optical network, PON) is an implementation technology of the optical access network, and the PON is an optical access technology for point-to-multipoint transmission. The following describes a system architecture of the PON.

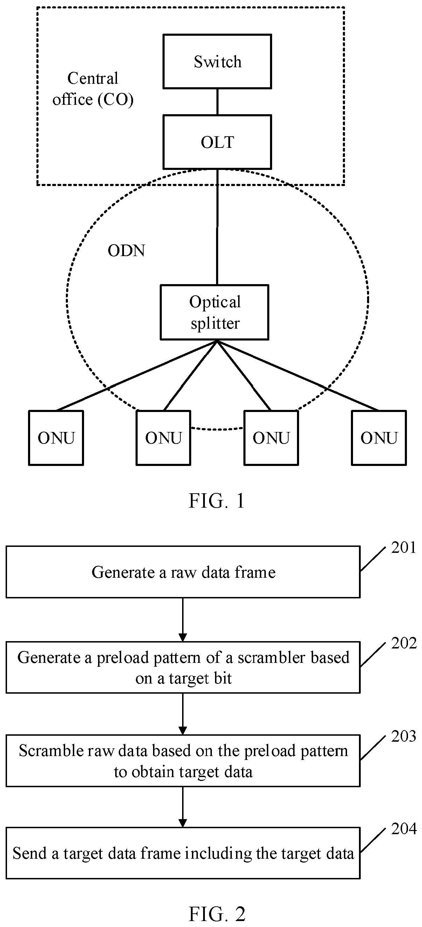

FIG. 1 is a schematic diagram of a system architecture of a PON. An optical line terminal (Optical Line Terminal, OLT) is configured to provide a network-side interface for the OAN. The OLT is connected to a network-side device (for example, a switch or a router) at an upper layer, and one or more optical distribution networks (optical distribution network, ODN) at a lower layer.

The ODN includes a passive optical splitter for optical power allocation, a feeder fiber connected between the passive optical splitter and the OLT, and a distribution fiber connected between the passive optical splitter and an optical network unit (Optical Network Unit, ONU). During downstream data transmission, the ODN transmits downstream data of the OLT to each ONU by using an optical splitter, and the ONU selectively receives downstream data that carries an identifier of the ONU. During upstream data transmission, the ODN combines N optical signals sent by ONUs into one optical signal to transmit to the OLT.

The ONU provides a user-side interface for the OAN and is connected to the ODN. If the ONU further provides a user port function, for example, the ONU provides an Ethernet user port or a plain old telephone service (plain old telephone service, POTS) user port, the ONU is referred to as an optical network termination (optical network termination, ONT).

In the PON network, to improve data transmission security and reduce a bit error rate at a data receiving end, bits 0 and bits 1 in transmitted data need to be more evenly distributed, which may be specifically implemented through data scrambling. This application provides a data scrambling method. The following describes in detail the data scrambling method provided in this application.

FIG. 2 is a schematic diagram of an embodiment of a data scrambling method according to this application. It should be noted that the data scrambling method may be applied to a scenario in which an OLT scrambles downstream data, or may be applied to a scenario in which an ONU scrambles upstream data. In this example, the data scrambling method includes the following steps.

201: Generate a raw data frame.

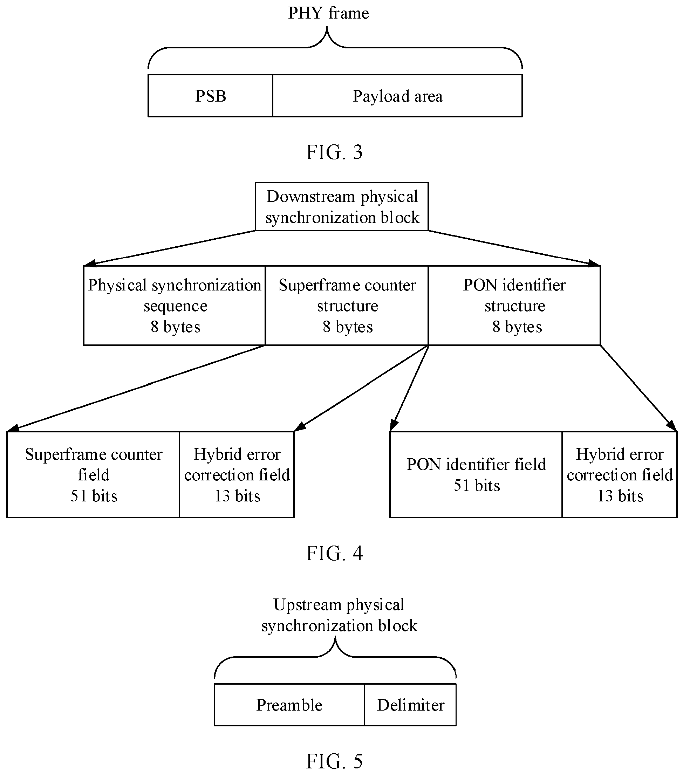

The raw data frame includes raw data and a physical synchronization block (physical synchronization block, PSB). Specifically, the raw data frame in this embodiment may be a PHY frame transmitted at a transmission aggregation layer. FIG. 3 is a schematic diagram of a structure of a PHY frame according to this application. As shown in FIG. 3, the PHY frame includes the PSB and a payload area, where the payload area is used for data, and a length of each PHY frame is 125 µs. It should be understood that if the raw data frame is a downstream data frame generated by an OLT, the PSB is specifically a downstream physical synchronization block (downstream physical synchronization block, PSBd). If the raw data frame is an upstream data frame generated by an ONU, the PSB is specifically an upstream physical synchronization block (upstream physical synchronization block, PSBu). It should be noted that structures of the PSBd and the PSBu are different. The following separately describes the structures.

FIG. 4 is a schematic diagram of a structure of a PSBd according to this application. As shown in FIG. 4, the PSBd includes an 8-byte physical synchronization (Physical synchronization, Psync) sequence, an 8-byte superframe counter structure (Superframe counter structure, SFC structure), and an 8-byte PON identifier structure (PON-ID structure). The Psync sequence is at a start location of each PSBd and is used for frame synchronization, that is, the ONU determines a start location of a downstream frame based on the Psync. The PON-ID structure includes a 51-bit PON-ID field and a 13-bit hybrid error correction (Hybrid error correction, HEC) field. The SFC structure includes a 51-bit SFC field and a 13-bit HEC field. A value of an SFC field in each PHY frame is increased by 1 relative to a value of an SFC field in a previous PHY frame, to implement superframe counting. After the SFC field reaches a maximum value of 51 bits, a value of the SFC field is reset to 0 in a next PHY frame.

FIG. 5 is a schematic diagram of a structure of a PSBu according to this application. As shown in FIG. 5, the PSBu includes a preamble and a delimiter. The preamble is mainly used by the OLT to restore a clock and establish a decision level. The delimiter is used to indicate an end bit of the preamble.

202: Generate a preload pattern of a scrambler based on a target bit.

In this embodiment, the target bit is a part of bits in an SFC value corresponding to the raw data frame. It should be noted that both the OLT and the ONU are locally equipped with SFCs. The local SFC counts each raw data frame. Therefore, each raw data frame has an output value of an SFC corresponding to the raw data frame, that is, an SFC value. Specifically, the SFC value may be represented in a form of a bit sequence. It can be understood that for the OLT, the PSBd includes an SFC field, and a value of the SFC field is the same as an output value of the local SFC. Then, the OLT can extract the target bit from the SFC field, or can extract the target bit from the output value of the local SFC. For the ONU, the PSBu includes no SFC field. Then, the ONU can extract the target bit only from an output value of the local SFC.

It should be noted that the SFC usually starts counting from 0 and is incremented by 1 every 125 µs. A length of the SFC value is 51 bits, that is, a decimal counting result of the SFC value may be presented by using a bit sequence whose length is 51 bits. It can be understood that an SFC value corresponding to a raw data frame that is ranked in the front is relatively small, that is, a number of bits 0 in the SFC value is extremely larger than a number of bits 1. Consequently, the bits 0 and the bits 1 are unevenly distributed. If scrambling is performed based on all bits in the SFC value, bits 0 and bits 1 in a start phase of target data obtained after the raw data is scrambled are also unevenly distributed, and a scrambling effect is poor. In addition, because in a counting process of the SFC, a least significant bit of the SFC value changes faster than a most significant bit, if the most significant bit in the SFC value is used to scramble data, a scrambling manner of a data frame that is ranked in the front has no change, and an effect of data encryption is poor.

Therefore, in an implementation, a part of least significant bits in the SFC value may be used as the target bit. Specifically, if a length of the preload pattern (preload pattern) that needs to be input to the scrambler is M bits, where M is an integer greater than 1, target bits include N least significant bits in the SFC value, where M is greater than or equal to 2 times of N. For example, if the length of the preload pattern is 58 bits, a number of the target bits is less than or equal to 29. Alternatively, a length of the SFC value is K bits, K is an integer greater than 1, and K is greater than or equal to 2 times of N. For example, if the length of the SFC value is 51 bits, a number of target bits is less than or equal to 25.

It can be understood that the foregoing descriptions of the target bit are only some examples, and a number of the target bits is not limited in this application. In addition, the target bits may be a string of consecutive bits in the SFC value, or may be non-consecutive bits in the SFC value. This is not specifically limited herein.

In this embodiment, after the target bit in the SFC value is determined, the target bit may be encoded according to some encoding rules, to obtain the preload pattern of the scrambler. The following describes several possible encoding manners by using an example in which the length of the preload pattern is 58 bits.

In a first manner, reverse interleaving is performed after a value of the target bit is inverted.

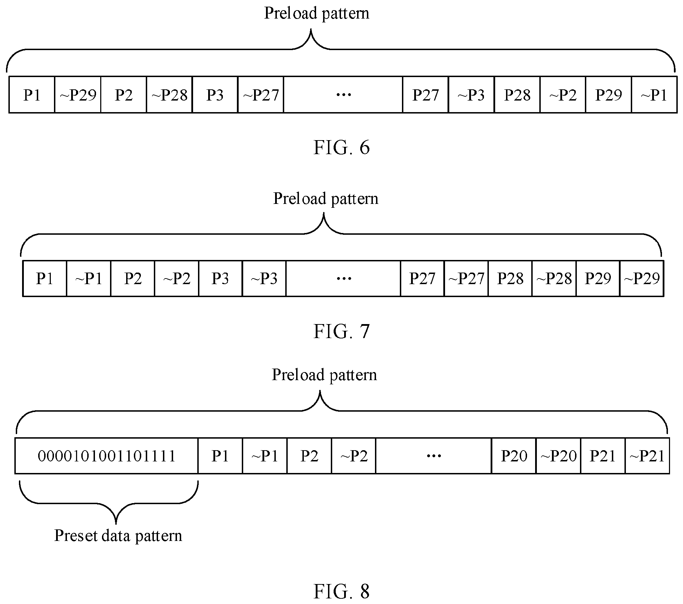

Specifically, FIG. 6 is a schematic diagram of a first embodiment of generating a preload pattern according to this application. As shown in FIG. 6, P1 to P29 represent the target bits. An inversion operation is performed on a value of each of the target bits, so that ~P1 to ~P29 can be obtained. For example, if a value of P1 is 0, a value of ~P1 is 1; if a value of P2 is 1, a value of ~P2 is 0, and so on. Further, reverse interleaving is performed on P1 to P29 and ~P1 to ~P29, to obtain the 58-bit preload pattern. To be specific, P1 is adjacent to ~P29, P2 is adjacent to ~P28, ..., and P29 is adjacent to ~P1.

In a second manner, forward interleaving is performed after a value of the target bit is inverted.

Specifically, FIG. 7 is a schematic diagram of a second embodiment of generating a preload pattern according to this application. As shown in FIG. 7, P1 to P29 represent the target bits. An inversion operation is performed on a value of each of the target bits, so that ~P1 to ~P29 can be obtained. For example, if a value of P1 is 0, a value of ~P1 is 1; if a value of P2 is 1, a value of ~P2 is 0, and so on. Further, forward interleaving is performed on P1 to P29 and ~P1 to ~P29, to obtain the 58-bit preload pattern. To be specific, P1 is adjacent to ~P1, P2 is adjacent to ~P2, ..., and P29 is adjacent to ~P29.

In a third manner, the preload pattern is generated based on the target bit and a preset data pattern.

Specifically, FIG. 8 is a schematic diagram of a third embodiment of generating a preload pattern according to this application. As shown in FIG. 8, P1 to P21 represent the target bits. An inversion operation is performed on a value of each of the target bits, so that ~P1 to ~P21 can be obtained. Further, forward interleaving is performed on P1 to P21 and ~P1 to ~P21 to obtain a 42-bit bit sequence. Then, the 42-bit bit sequence is combined with a preset 16-bit data pattern to obtain the 58-bit preload pattern. It can be understood that specific composition of the preset data pattern is not limited in this application. Certainly, to improve a scrambling effect, a number of bits 0 and a number of bits 1 are preferably the same in the preset data pattern. For example, both the number of bits 0 and the number of bits 1 in the preset data pattern shown in FIG. 8 are 8.

It can be understood that, in the foregoing three implementations, the inversion operation is performed on the value of each of the target bits, and then arrangement is performed. This is operated to enable a number of bits 0 and a number of bits 1 in the preload pattern to be more balanced, thereby improving a scrambling effect.

It should be noted that the foregoing three implementations of constructing the preload pattern are only some examples. In actual application, any manner of constructing the preload pattern based on a part of bits in the SFC value falls within the protection scope of this application. For example, after the inversion operation is performed on the value of each of the target bits, the target bits may be combined with an inverted bit sequence in any arrangement manner, to generate a preloaded bit sequence.

203: Scramble the raw data based on the preload pattern to obtain the target data.

In this embodiment, the preload pattern is input to the scrambler; then, a target pattern is generated according to a polynomial operation rule preset in the scrambler; and further, an exclusive OR operation is performed on each bit of the raw data based on the target pattern to obtain to-be-sent target data. The scrambler usually includes a shift register and a logical operation unit. The following describes a data scrambling manner with reference to a working principle of the scrambler.

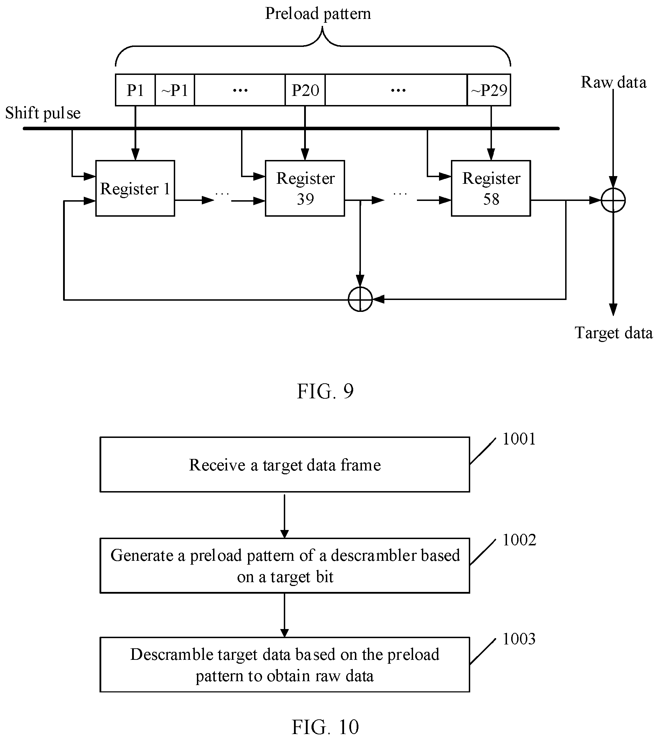

FIG. 9 is a schematic diagram of a structure of a scrambler according to this application. For example, the length of the preload pattern is 58 bits. As shown in FIG. 9, shift registers include a total of 58 registers from a register 1 to a register 58, and the registers are in a one-to-one correspondence with the bits in the preload pattern. An initial value input by each register is a value of a bit that is in the preload pattern and that is corresponding to the register. For example, the polynomial operation rule preset in the scrambler is "x58+x39+1". When a shift pulse arrives, a value of a last register is output, and content of an i^{th} register is stored in an (i+1)^{th} register. In addition, according to the polynomial operation rule, an output of the register 39 and an output of the register 58 are calculated according to a specific linear operation rule to obtain a value, and the value is stored in a first register. With accumulation of shift pulses, the shift register performs continuous output, and output results of the shift register may form a pseudo-random sequence. Further, the exclusive OR operation is performed between each output value of the shift register and each bit of the raw data, and operation results of a plurality of exclusive OR operations may form the target data. This is a process of scrambling the raw data to obtain the target data. It can be understood that the polynomial operation rule listed above is only an example. In actual application, there may alternatively be another polynomial operation rule, for example, x58+x38+1. Correspondingly, in an actual operation, an output of the register 38 and the output of the register 58 needs to be calculated according to a specific linear operation rule to obtain a value, and the value is stored in the first register.

204: Send a target data frame including the target data.

In this embodiment, a format of the target data frame is similar to a format of the raw data frame described above. A difference lies only in that the scrambled target data replaces the raw data, and other same aspects are not described one by one herein again.

In this embodiment of this application, a part of target bits are extracted from the SFC value corresponding to the raw data frame to construct the preload pattern of the scrambler. Then, the raw data in the raw data frame is scrambled based on the preload pattern to obtain the to-be-sent target data. The raw data is scrambled, so that bits 0 and bits 1 in the scrambled target data are more evenly distributed. This reduces a possibility that consecutive bits 0 or bits 1 appear in the target data, thereby reducing a bit error rate at a data receiving end. Further, because a least significant bit in the SFC value continuously changes with a number of frames, the preload pattern constructed based on the least significant bit in the SFC value also continuously changes with the number of frames, so that a scrambling manner of each frame continuously changes. Therefore, an effect of data encryption is better, and data transmission security is improved. In addition, the bits 0 and the bits 1 in the preload pattern constructed based on the least significant bit in the SFC value are more evenly distributed, thereby further ensuring even distribution of the bits 0 and the bits 1 in the scrambled target data.

The foregoing describes the data scrambling method provided in this application. It can be understood that after scrambled data reaches a data receiving end, descrambling needs to be performed on the scrambled data to restore raw data. The following describes a data descrambling method provided in this application.

FIG. 10 is a schematic diagram of an embodiment of a data descrambling method according to this application.

1001: Receive a target data frame.

In this embodiment, the target data frame includes target data obtained after raw data is scrambled. The target data frame may be a downstream data frame sent by an OLT to an ONU, or may be an upstream data frame sent by the ONU to the OLT. For details, refer to the related descriptions in FIG. 3 to FIG. 5. Details are not described herein again.

1002: Generate a preload pattern of a descrambler based on a target bit.

In this embodiment, for descriptions of the target bit, refer to the related descriptions in step 202 of the embodiment shown in FIG. 2. Details are not described herein again. It should be noted that if a data receiving end is the ONU, after receiving the target data frame, the ONU may first perform frame synchronization based on a PSBd in the target data frame. After completing frame synchronization, the ONU can determine a boundary between frames, and determine an SFC field in the current target data frame, to extract the target bit from the SFC field. In addition, the ONU can also extract the target bit from an output value of a local SFC. If the data receiving end is the OLT, and a PSBu in the target data frame includes no SFC field, the OLT can extract the target bit only from an output value of a local SFC. It can be understood that, regardless of whether the data receiving end is the OLT or the ONU, the target bit extracted from the SFC value is the same as a target bit determined by a data transmitting end.

In this embodiment, a manner of generating the preload pattern based on the target bit is similar to the related descriptions in step 203 in the embodiment shown in FIG. 2. Details are not described herein again. It can be understood that the preload pattern input by a data transmitting end to the scrambler in the embodiment shown in FIG. 2 is the same as the preload pattern input by the data receiving end to the descrambler in this embodiment. To be specific, the data receiving end needs to encode the target bit in an encoding manner the same as that of the data transmitting end, to obtain the preload pattern the same as that of the data transmitting end.

1003: Descramble the target data based on the preload pattern to obtain the raw data.

In this embodiment, a structure and a working principle of the descrambler are similar to the structure and the working principle of the scrambler shown in FIG. 9. Details are not described herein again. It can be understood that because the preload pattern input by the data transmitting end to the scrambler is the same as the preload pattern input by the data receiving end to the descrambler in this embodiment, an exclusive OR operation is performed between each output value of a shift register and each bit of the target data to restore the raw data.

The following describes a data scrambling apparatus and a data descrambling apparatus provided in this application.

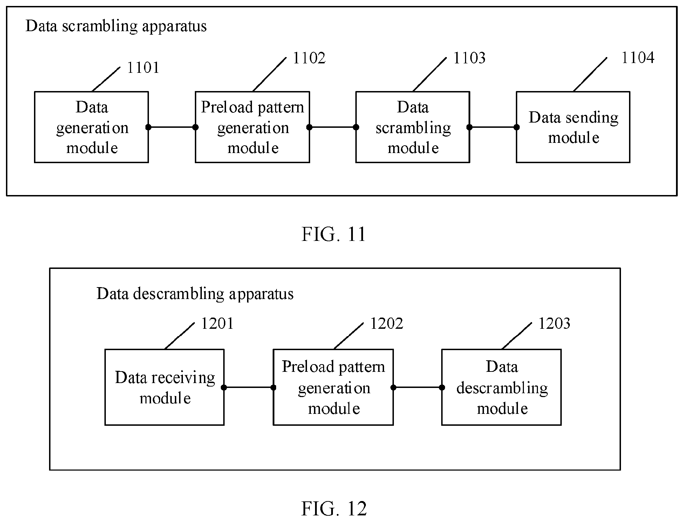

FIG. 11 is a schematic diagram of an embodiment of a data scrambling apparatus according to this application. The data scrambling apparatus includes a data generation module 1101, a preload pattern generation module 1102, a data scrambling module 1103, and a data sending module 1104. Specifically, the data generation module 1101 is configured to perform the operation in step 201 in the embodiment shown in FIG. 2. The preload pattern generation module 1102 is configured to perform the operation in step 202 in the embodiment shown in FIG. 2. The data scrambling module 1103 is configured to perform the operation in step 203 in the embodiment shown in FIG. 2. The data sending module 1104 is configured to perform the operation in step 204 in the embodiment shown in FIG. 2.

FIG. 12 is a schematic diagram of an embodiment of a data descrambling apparatus according to this application. The data descrambling apparatus includes a data receiving module 1201, a preload pattern generation module 1202, and a data descrambling module 1203. Specifically, the data receiving module 1201 is configured to perform the operation in step 1001 in the embodiment shown in FIG. 10. The preload pattern generation module 1202 is configured to perform the operation in step 1002 in the embodiment shown in FIG. 10. The data descrambling module 1203 is configured to perform the operation in step 1003 in the embodiment shown in FIG. 10.

The following describes an OLT and an ONU provided in this application.

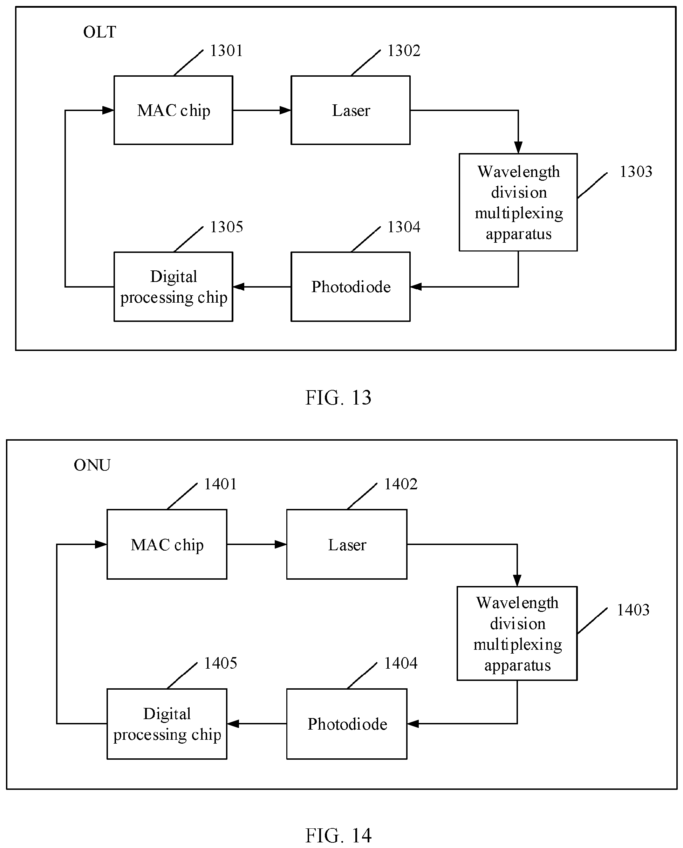

FIG. 13 is a schematic diagram of a structure of a possible OLT according to this application. The OLT includes a media access control (Media Access Control, MAC) chip 1301, a laser 1302, a wavelength division multiplexing apparatus 1303, a photodiode 1304, and a digital processing chip 1305. Specifically, the MAC chip 1301 and/or the digital processing chip 1305 are/is configured to perform the operations of the data generation module 1101, the preload pattern generation module 1102, the data scrambling module 1103, and the data sending module 1104 in the embodiment shown in FIG. 11. The laser 1302 is configured to convert an electrical signal output by the MAC chip 1301 into an optical signal. The wavelength division multiplexing apparatus 1303 is configured to perform multiplexing on a to-be-sent optical signal, and the wavelength division multiplexing apparatus 1303 is further configured to perform demultiplexing on a received optical signal. The photodiode 1304 is configured to convert a received optical signal into an electrical signal. The MAC chip 1301 and/or the digital processing chip 1305 are/is further configured to perform the operations of the data receiving module 1201, the preload pattern generation module 1202, and the data descrambling module 1203 in the embodiment shown in FIG. 12.

FIG. 14 is a schematic diagram of a structure of a possible ONU according to this application. The ONU includes a MAC chip 1401, a laser 1402, a wavelength division multiplexing apparatus 1403, a photodiode 1404, and a digital processing chip 1405. Specifically, the MAC chip 1401 and/or the digital processing chip 1405 are/is configured to perform the operations of the data generation module 1101, the preload pattern generation module 1102, the data scrambling module 1103, and the data sending module 1104 in the embodiment shown in FIG. 11. The laser 1402 is configured to convert an electrical signal output by the MAC chip 1401 into an optical signal. The wavelength division multiplexing apparatus 1403 is configured to perform multiplexing on a to-be-sent optical signal, and the wavelength division multiplexing apparatus 1403 is further configured to perform demultiplexing on a received optical signal. The photodiode 1404 is configured to convert a received optical signal into an electrical signal. The MAC chip 1401 and/or the digital processing chip 1405 are/is further configured to perform the operations of the data receiving module 1201, the preload pattern generation module 1202, and the data descrambling module 1203 in the embodiment shown in FIG. 12.

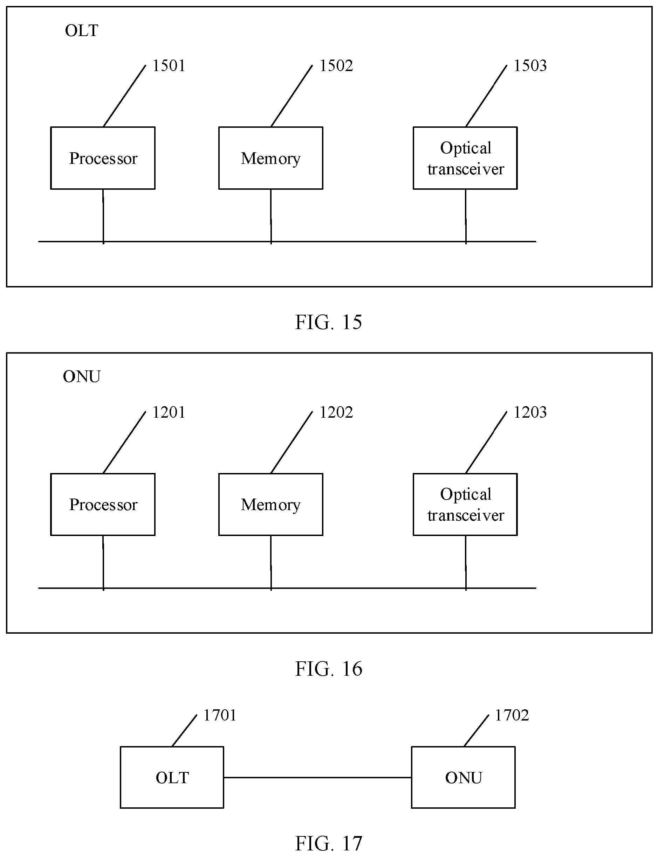

FIG. 15 is a schematic diagram of a structure of another possible OLT according to this application. The OLT includes a processor 1501, a memory 1502, and an optical transceiver 1503. The processor 1501, the memory 1502, and the optical transceiver 1503 are connected to each other by using a line. The memory 1502 is configured to store program instructions and data. It should be noted that the optical transceiver 1503 is configured to perform data transmitting/receiving operations in the steps shown in FIG. 2 and FIG. 10. The processor 1501 is configured to perform operations other than the data transmitting/receiving operations in the steps shown in FIG. 2 and FIG. 10. In a possible implementation, the processor 1501 may include the scrambler shown in FIG. 9 or a descrambler in a similar structure. The OLT scrambles, by using the scrambler, to-be-sent raw data to obtain target data. The OLT descrambles, by using the descrambler, the received target data to restore the raw data.

FIG. 16 is a schematic diagram of a structure of another possible ONU according to this application. The ONU includes a processor 1601, a memory 1602, and an optical transceiver 1603. The processor 1601, the memory 1602, and the optical transceiver 1603 are connected to each other by using a line. The memory 1602 is configured to store program instructions and data. It should be noted that the optical transceiver 1603 is configured to perform data transmitting/receiving operations in the steps shown in FIG. 2 and FIG. 10. The processor 1601 is configured to perform operations other than the data transmitting/receiving operations in the steps shown in FIG. 2 and FIG. 10. In a possible implementation, the processor 1601 may include the scrambler shown in FIG. 9 or a descrambler in a similar structure. The ONU scrambles, by using the scrambler, to-be-sent raw data to obtain target data. The ONU descrambles, by using the descrambler, the received target data to restore the raw data.

It should be noted that the processors shown in FIG. 15 and FIG. 16 each may use a general-purpose central processing unit (Central Processing Unit, CPU), a microprocessor, an application-specific integrated circuit ASIC, or at least one integrated circuit to execute a related program, to implement the technical solutions provided in embodiments of this application. The memories shown in FIG. 15 and FIG. 16 each may store an operating system and another application program. When the technical solutions provided in embodiments of this application are implemented by using software or firmware, program code used to implement the technical solutions provided in embodiments of this application is stored in the memory, and is executed by the processor. In one embodiment, the processor may include the memory. In another embodiment, the processor and the memory are two independent structures.

FIG. 17 is a schematic diagram of a structure of a passive optical network according to this application. The passive optical network includes an OLT (1701) and an ONU (1702). If the OLT (1701) is used as a data transmitting end and the ONU (1702) is used as a data receiving end, the OLT (1701) is configured to perform some or all steps of any method in the embodiment shown in FIG. 2, and the ONU (1702) is configured to perform some or all steps of any method in the embodiment shown in FIG. 10. If the ONU (1702) is used as a data transmitting end and the OLT (1701) is used as a data receiving end, the ONU (1702) is configured to perform some or all steps of any method in the embodiment shown in FIG. 2, and the OLT (1701) is configured to perform some or all steps of any method in the embodiment shown in FIG. 10.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

A person of ordinary skill in the art may understand that all or some of the steps of the foregoing embodiments may be implemented by hardware or a program instructing related hardware. The program may be stored in a computer-readable storage medium. The storage medium may be a read-only memory, a random access memory, or the like. Specifically, for example, the foregoing processing unit or processor may be a central processing unit, a general-purpose processor, a digital signal processor (DSP), an application-specific integrated circuit (ASIC), a field programmable gate array (FPGA) or another programmable logic device, a transistor logic device, a hardware component, or any combination thereof. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

When software is used to implement the foregoing embodiments, some or all of the method steps described in the foregoing embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The available medium may be a magnetic medium (for example, a floppy disk, a hard disk, or a magnetic tape), an optical medium (for example, a DVD), a semiconductor medium (for example, a solid-state drive Solid-State Drive (SSD)), or the like.

Finally, it should be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data scrambling method, comprising:
generating a raw data frame, wherein the raw data frame comprises a physical synchronization block PSB and raw data;
generating a preload pattern based on a target bit, wherein the target bit is a part of bits in a superframe counter SFC value corresponding to the raw data frame; and
scrambling the raw data based on the preload pattern to obtain target data,
**characterized in that**
a number of bits whose values are 0 and a number of bits whose values are 1 in the preload pattern the same.

2. The method according to claim 1, wherein the scrambling the raw data based on the preload pattern to obtain target data comprises:
performing an operation on the preload pattern according to a polynomial operation rule preset in a scrambler to generate a target pattern; and
performing an exclusive OR operation on each bit of the raw data based on the target pattern to obtain the target data.

3. The method according to any one of claims 1 to 2, wherein a length of the preload pattern is M bits, M is an integer greater than 1, the target bit comprises N least significant bits in the SFC value, and M is greater than or equal to 2 times of N.

4. The method according to any one of claims 1 to 3, wherein the generating a preload pattern based on a target bit comprises:
determining an opposite value of a value of each bit in the target bit; and
arranging the value of each bit in the target bit and the opposite value of the value of each bit in the target bit to obtain the preload pattern.

5. A data descrambling method, comprising:
receiving a target data frame, wherein the target data frame comprises target data and a physical synchronization block PSB;
generating a preload pattern based on a target bit, wherein the target bit is a part of bits in a superframe counter SFC value corresponding to the target data frame; and
descrambling the target data based on the preload pattern to obtain raw data,
**characterized in that**
a number of bits whose values are 0 and a number of bits whose values are 1 in the preload pattern are the same.

6. The method according to claim 5, wherein the descrambling the target data based on the preload pattern to obtain raw data comprises:
performing an operation on the preload pattern according to a polynomial operation rule preset in a descrambler to generate a target pattern; and
performing an exclusive OR operation on each bit of the target data based on the target pattern to obtain the raw data.

7. The method according to any one of claims 5 to 6, wherein a length of the preload pattern is M bits, M is an integer greater than 1, the target bit comprises N least significant bits in the SFC value, and M is greater than or equal to 2 times of N.

8. The method according to any one of claims 5 to 7, wherein the generating a preload pattern based on a target bit comprises:
determining an opposite value of a value of each bit in the target bit; and
arranging the value of each bit in the target bit and the opposite value of the value of each bit in the target bit to obtain the preload pattern.

9. A data scrambling apparatus, comprising a processor (1501; 1601), a memory (1502; 1602), and an optical transceiver (1503; 1603), wherein the processor (1501; 1601), the memory (1502; 1602), and the optical transceiver (1503; 1603) are connected to each other by using a line, and the processor (1501; 1601) is configured to invoke program code in the memory (1502; 1602) to perform the method according to any one of claims 1 to 4.

10. A data descrambling apparatus, comprising a processor (1501; 1601), a memory (1502; 1602), and an optical transceiver (1503; 1603), wherein the processor (1501; 1601), the memory (1502; 1602), and the optical transceiver (1503; 1603) are connected to each other by using a line, and the processor (1501; 1601) is configured to invoke program code in the memory (1502; 1602) to perform the method according to any one of claims 5 to 8.

11. An optical line terminal OLT (1701), comprising the data scrambling apparatus according to claim 9 and the data descrambling apparatus according to claim 10.

12. An optical network unit ONU (1702), comprising the data scrambling apparatus according to claim 9 and the data descrambling apparatus according to claim 10.

13. A passive optical network, wherein the passive optical network comprises the OLT (1701) according to claim 11 and the ONU (1702) according to claim 12.

## Patentansprüche

1. Datenverschlüsselungsverfahren, umfassend:
Erzeugen eines Rohdatenrahmens, wobei der Rohdatenrahmen einen physikalischen Synchronisationsblock (PSB) und Rohdaten umfasst;
Erzeugen eines Vorlademusters basierend auf einem Zielbit, wobei das Zielbit ein Teil von Bits in einem Überrahmenzähler-(SFC-)Wert ist, der dem Rohdatenrahmen entspricht; und
Verschlüsseln der Rohdaten basierend auf dem Vorlademuster, um Zieldaten zu erlangen,
**dadurch gekennzeichnet, dass**
eine Anzahl von Bits, deren Werte 0 sind, und eine Anzahl von Bits, deren Werte 1 sind, in dem Vorlademuster gleich sind.

2. Verfahren nach Anspruch 1, wobei das Verschlüsseln der Rohdaten basierend auf dem Vorlademuster, um Zieldaten zu erlangen, Folgendes umfasst:
Durchführen einer Operation auf dem Vorlademuster gemäß einer in einem Scrambler voreingestellten Polynomoperationsregel, um ein Zielmuster zu erzeugen; und
Durchführen einer exklusiven ODER-Operation an jedem Bit der Rohdaten basierend auf dem Zielmuster, um die Zieldaten zu erlangen.

3. Verfahren nach einem der Ansprüche 1 bis 2, wobei eine Länge des Vorlademusters M Bits ist, M eine ganze Zahl größer als 1 ist, das Zielbit N niedrigstwertige Bits in dem SFC-Wert umfasst und M größer oder gleich einem Zweifachen von N ist.

4. Verfahren nach einem der Ansprüche 1 bis 3, wobei das Erzeugen eines Vorlastmusters basierend auf einem Zielbit Folgendes umfasst:
Bestimmen eines entgegengesetzten Wertes eines Wertes jedes Bits in dem Zielbit; und
Anordnen des Wertes jedes Bits in dem Zielbit und des entgegengesetzten Wertes des Wertes jedes Bits in dem Zielbit, um das Vorlastmuster zu erlangen.

5. Datenentschlüsselungsverfahren, umfassend:
Empfangen eines Zieldatenrahmens, wobei der Zieldatenrahmen Zieldaten und einen physikalischen Synchronisationsblock (PSB) umfasst;
Erzeugen eines Vorlademusters basierend auf einem Zielbit, wobei das Zielbit ein Teil von Bits in einem Überrahmenzähler-(SFC-)Wert ist, der dem Zieldatenrahmen entspricht; und
Entschlüsseln der Zieldaten basierend auf dem Vorlademuster, um Rohdaten zu erlangen,
**dadurch gekennzeichnet, dass**
eine Anzahl von Bits, deren Werte 0 sind, und eine Anzahl von Bits, deren Werte 1 sind, in dem Vorlademuster gleich sind.

6. Verfahren nach Anspruch 5, wobei das Entschlüsseln der Zieldaten basierend auf dem Vorlademuster, um Rohdaten zu erlangen, Folgendes umfasst:
Durchführen einer Operation auf dem Vorlademuster gemäß einer in einem Descrambler voreingestellten Polynomoperationsregel, um ein Zielmuster zu erzeugen; und
Durchführen einer exklusiven ODER-Operation an jedem Bit der Zieldaten basierend auf dem Zielmuster, um die Rohdaten zu erlangen.

7. Verfahren nach einem der Ansprüche 5 bis 6, wobei eine Länge des Vorlademusters M Bits ist, M eine ganze Zahl größer als 1 ist, das Zielbit N niedrigstwertige Bits in dem SFC-Wert umfasst und M größer oder gleich einem Zweifachen von N ist.

8. Verfahren nach einem der Ansprüche 5 bis 7, wobei das Erzeugen eines Vorlastmusters basierend auf einem Zielbit Folgendes umfasst:
Bestimmen eines entgegengesetzten Wertes eines Wertes jedes Bits in dem Zielbit; und
Anordnen des Wertes jedes Bits in dem Zielbit und des entgegengesetzten Wertes des Wertes jedes Bits in dem Zielbit, um das Vorlastmuster zu erlangen.

9. Datenverschlüsselungseinrichtung, umfassend einen Prozessor (1501; 1601), einen Speicher (1502; 1602) und einen optischen Transceiver (1503; 1603), wobei der Prozessor (1501; 1601), der Speicher (1502; 1602) und der optische Transceiver (1503; 1603) mithilfe einer Leitung miteinander verbunden sind und der Prozessor (1501; 1601) konfiguriert ist, um einen Programmcode in dem Speicher (1502; 1602) aufzurufen, um das Verfahren nach einem der Ansprüche 1 bis 4 durchzuführen.

10. Datenentschlüsselungseinrichtung, umfassend einen Prozessor (1501; 1601), einen Speicher (1502; 1602) und einen optischen Transceiver (1503; 1603), wobei der Prozessor (1501; 1601), der Speicher (1502; 1602) und der optische Transceiver (1503; 1603) mithilfe einer Leitung miteinander verbunden sind und der Prozessor (1501; 1601) konfiguriert ist, um einen Programmcode in dem Speicher (1502; 1602) aufzurufen, um das Verfahren nach einem der Ansprüche 5 bis 8 durchzuführen.

11. Optisches Leitungsendgerät (OLT) (1701), umfassend die Datenverschlüsselungseinrichtung nach Anspruch 9 und die Datenentschlüsselungseinrichtung nach Anspruch 10.

12. Optische Netzwerkeinheit (ONU) (1702), umfassend die Datenverschlüsselungseinrichtung nach Anspruch 9 und die Datenentschlüsselungseinrichtung nach Anspruch 10.

13. Passives optisches Netzwerk, wobei das passive optische Netzwerk das OLT (1701) nach Anspruch 11 und die ONU (1702) nach Anspruch 12 umfasst.

## Revendications

1. Procédé d'embrouillage de données, comprenant :
la génération d'une trame de données brutes, dans lequel la trame de données brutes comprend un bloc de synchronisation physique PSB et des données brutes ;
la génération d'un motif de précharge sur la base d'un bit cible, dans lequel le bit cible est une partie de bits dans une valeur de compteur de supertrame SFC correspondant à la trame de données brutes ; et
le brouillage des données brutes sur la base du motif de précharge pour obtenir des données cibles,
**caractérisé en ce que**
un certain nombre de bits dont la valeur est 0 et un certain nombre de bits dont la valeur est 1 dans le motif de précharge sont identiques.

2. Procédé selon la revendication 1, dans lequel le brouillage des données brutes sur la base du motif de précharge pour obtenir des données cibles comprend :
la réalisation d'une opération sur le motif de précharge selon une règle d'opération polynomiale prédéfinie dans un brouilleur pour générer un motif cible ; et
la réalisation d'une opération OU exclusif sur chaque bit des données brutes sur la base du motif cible pour obtenir les données cibles.

3. Procédé selon l'une quelconque des revendications 1 et 2, dans lequel une longueur du motif de précharge est de M bits, M est un entier supérieur à 1, le bit cible comprend N bits de poids faible dans la valeur SFC, et M est supérieur ou égal à 2 fois N.

4. Procédé selon l'une quelconque des revendications 1 à 3, dans lequel la génération d'un motif de précharge sur la base d'un bit cible comprend :
la détermination d'une valeur opposée d'une valeur de chaque bit dans le bit cible ; et
l'arrangement de la valeur de chaque bit dans le bit cible et de la valeur opposée de la valeur de chaque bit dans le bit cible pour obtenir le motif de précharge.

5. Procédé de désembrouillage de données, comprenant :
la réception d'une trame de données cibles, dans lequel la trame de données cibles comprend des données cibles et un bloc de synchronisation physique PSB ;
la génération d'un motif de précharge sur la base d'un bit cible, dans lequel le bit cible est une partie de bits dans une valeur de compteur de supertrame SFC correspondant à la trame de données cibles ; et
le désembrouillage des données cibles sur la base du motif de précharge pour obtenir des données brutes,
**caractérisé en ce que**
un certain nombre de bits dont la valeur est 0 et un certain nombre de bits dont la valeur est 1 dans le motif de précharge sont identiques.

6. Procédé selon la revendication 5, dans lequel le désembrouillage des données cibles sur la base du motif de précharge pour obtenir des données brutes comprend :
la réalisation d'une opération sur le motif de précharge selon une règle d'opération polynomiale prédéfinie dans un désembrouilleur pour générer un motif cible ; et
la réalisation d'une opération OU exclusif sur chaque bit des données cibles sur la base du motif cible pour obtenir les données brutes.

7. Procédé selon l'une quelconque des revendications 5 à 6, dans lequel une longueur du motif de précharge est de M bits, M est un entier supérieur à 1, le bit cible comprend N bits de poids faible dans la valeur SFC, et M est supérieur ou égal à 2 fois N.

8. Procédé selon l'une quelconque des revendications 5 à 7, dans lequel la génération d'un motif de précharge sur la base d'un bit cible comprend :
la détermination d'une valeur opposée d'une valeur de chaque bit dans le bit cible ; et
l'arrangement de la valeur de chaque bit dans le bit cible et de la valeur opposée de la valeur de chaque bit dans le bit cible pour obtenir le motif de précharge.

9. Appareil de brouillage de données, comprenant un processeur (1501 ; 1601), une mémoire (1502 ; 1602) et un émetteur-récepteur optique (1503 ; 1603), dans lequel le processeur (1501 ; 1601), la mémoire (1502 ; 1602) et l'émetteur-récepteur optique (1503 ; 1603) sont connectés entre eux par une ligne, et le processeur (1501 ; 1601) est configuré pour faire appel au code du programme dans la mémoire (1502 ; 1602) afin d'exécuter le procédé selon l'une quelconque des revendications 1 à 4.

10. Appareil de désembrouillage de données, comprenant un processeur (1501 ; 1601), une mémoire (1502 ; 1602), et un émetteur-récepteur optique (1503 ; 1603), dans lequel le processeur (1501 ; 1601), la mémoire (1502 ; 1602), et l'émetteur-récepteur optique (1503 ; 1603) sont connectés entre eux à l'aide d'une ligne, et le processeur (1501 ; 1601) est configuré pour faire appel au code de programme dans la mémoire (1502 ; 1602) pour exécuter le procédé selon l'une quelconque des revendications 5 à 8.

11. Terminal de ligne optique OLT (1701), comprenant l'appareil de brouillage de données selon la revendication 9 et l'appareil de désembrouillage de données selon la revendication 10.

12. Unité de réseau optique ONU (1702), comprenant l'appareil de brouillage de données selon la revendication 9 et l'appareil de désembrouillage de données selon la revendication 10.

13. Réseau optique passif, dans lequel le réseau optique passif comprend l'OLT (1701) selon la revendication 11 et l'ONU (1702) selon la revendication 12.
